(19) Europäisches Patentamt
European Patent Office
Office européen des brevets

(11) **EP 4 653 859 A1**

(12) **EUROPEAN PATENT APPLICATION**

(43) Date of publication:
26.11.2025 Bulletin 2025/48

(21) Application number: 25176634.1

(22) Date of filing: 15.05.2025

(51) International Patent Classification (IPC):
*G01N 27/416* (2006.01)

(52) Cooperative Patent Classification (CPC):
G01N 27/4165

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.05.2024 JP 2024084160

(71) Applicant: Yokogawa Electric Corporation
Tokyo 180-8750 (JP)

(72) Inventors:
• KAJIKAWA, Tomohiro
Musashino-shi, Tokyo, 180-8750, (JP)
• MITA, Kentarou
Musashino-shi, Tokyo, 180-8750, (JP)

(74) Representative: Winter, Brandl - Partnerschaft
mbB
Alois-Steinecker-Straße 22
85354 Freising (DE)

(54) **CALIBRATION APPARATUS, CALIBRATION METHOD, AND CALIBRATION PROGRAM**

(57) A calibration apparatus (10) calibrates a pH sensor (CS-1) that measures a pH of an aqueous solution and calibrates a pH sensor (CS-2) different from the pH sensor (CS-1), and when both the pH sensor (CS-1) and the pH sensor (CS-2) are immersed in a pH standard solution indicating a predetermined pH, the calibration device (10) manages the pH sensor (CS-1) and the pH sensor (CS-2) so as to enable calibrations thereof in parallel.

EP 4 653 859 A1

**Description**

FIELD

The present invention relates to a calibration apparatus, a calibration method, and a calibration program.

BACKGROUND

A pH sensor is a sensor that measures a pH (hydrogen ion exponent) value of a target aqueous solution. As a measurement method for the pH sensor, a glass electrode method is known. The glass electrode method is a measurement method using a proportional relationship between a potential difference between two electrodes in the pH sensor and a pH value of an object to be measured. For measuring pH by using the above method, periodic calibration by a worker is required. At this time, the worker performs calibration using a pH standard solution whose pH value is known (see, for example, JP 2016-188819 A and JP 2001-228139 A).

However, it is difficult to reduce a time required for calibrations of a plurality of pH sensors. For example, in the related art, upon calibration of a plurality of pH sensors, the pH sensors are calibrated one by one, requiring a time that is proportional to the number of pH sensors.

The present invention has been made in view of the above, it is possible to reduce a time required for calibrations of a plurality of pH sensors.

SUMMARY

According to an aspect of the embodiments, a calibration apparatus includes a first calibration unit that calibrates a first pH sensor measuring a pH of an aqueous solution, a second calibration unit that calibrates a second pH sensor different from the first pH sensor, and a calibration management unit that manages the first pH sensor and the second pH sensor so as to enable calibrations thereof in parallel, when the first pH sensor and the second pH sensor are both immersed in a pH standard solution indicating a predetermined pH.

According to an aspect of the embodiments, a calibration method, the method executed by a computer, includes calibrating a first pH sensor that measures a pH of an aqueous solution, calibrating a second pH sensor different from the first pH sensor, and managing, when both of the first pH sensor and the second pH sensor are immersed in an identical pH standard solution, the first pH sensor and the second pH sensor so as to enable calibrations thereof in parallel.

According to an aspect of the embodiments, a calibration program causing a computer to execute processing of calibrating a first pH sensor that measures a pH of an aqueous solution, calibrating a second pH sensor that is different from the first pH sensor, and managing, when both of the first pH sensor and the second pH sensor are immersed in an identical pH standard solution, the first pH sensor and the second pH sensor so as to enable calibrations thereof in parallel.

BRIEF DESCRIPTION OF THE DRAWINGS

FIG. 1 is a diagram illustrating an exemplary configuration and an exemplary process of a pH sensor calibration system according to an embodiment;
FIG. 2 is a graph illustrating a relationship between a potential difference between electrodes of a pH sensor calibration system and pH, according to a reference technology;
FIG. 3 is a diagram illustrating steps of a procedure in the pH sensor calibration system according to a reference technology;
FIG. 4 is a diagram illustrating time variation in measured value during calibration of the pH sensor calibration system according to a reference technology;
FIG. 5 is a block diagram illustrating an exemplary configuration of each device of the pH sensor calibration system according to an embodiment;
FIG. 6 is a diagram illustrating a specific example of steps of a procedure in the pH sensor calibration system according to an embodiment;
FIG. 7 is a flowchart illustrating an example of a process in the pH sensor calibration system according to an embodiment; and
FIG. 8 is a diagram illustrating an exemplary hardware configuration according to an embodiment.

DETAILED DESCRIPTION OF THE PREFERRED EMBODIMENTS

Hereinafter, a calibration apparatus, a calibration method, and a calibration program according to an embodiment of the present invention will be described in detail with reference to the drawings. Note that the present invention is not limited to the embodiments described below.

In the following, a configuration and process of a pH sensor calibration system 100 according to an embodiment, a configuration and process of each device of the pH sensor calibration system 100, each process step of the pH sensor calibration system 100, and effects of an embodiment will be described.

1. Configuration and process of pH sensor calibration system 100

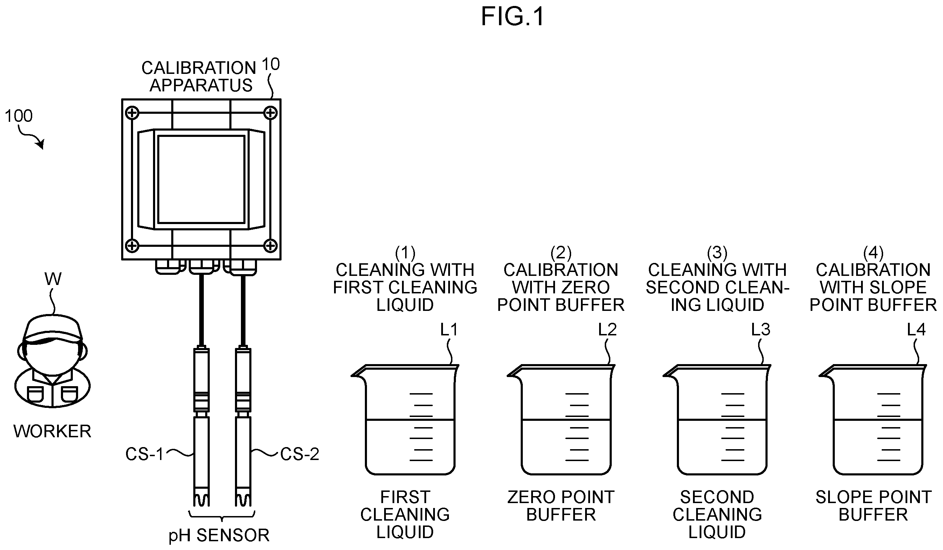

The configuration and the process of the pH sensor calibration system 100 according to an embodiment will be described with reference to FIGS. 1 to 4. Hereinafter, an exemplary entire configuration of the pH sensor calibration system 100, a basic principle of the pH sensor calibration system 100, an exemplary process of the pH sensor calibration system 100, and effects of the pH sensor calibration system 100 will be described. Note that in the embodiments, a calibration apparatus 10 for calibrating a pH sensor CS for measuring pH will be described as an example, but an object to be measured or an application field is not limited.

1-1. Exemplary entire configuration of pH sensor calibration system 100

Here, an exemplary entire configuration of the pH sensor calibration system 100 will be described with reference to FIG. 1. The pH sensor calibration system 100 includes the calibration apparatus 10, the pH sensors CS (CS-1 and CS-2), and various liquids L (first cleaning liquid L1, a zero point buffer L2, a second cleaning liquid L3, and a slope point buffer L4). FIG. 1 is a diagram illustrating an exemplary configuration and an exemplary process of the pH sensor calibration system 100 according to an embodiment. Here, the calibration apparatus 10 and each of the pH sensors CS are connected via a predetermined wiring. Furthermore, the calibration apparatus 10 is communicably connected to each of various devices, which are not illustrated, via a predetermined communication network, which is not illustrated, in a wired or wireless manner. Note that various communication networks such as the Internet and a dedicated line are allowed to be adopted, for the predetermined communication network.

1-1-1. Calibration device 10

The calibration apparatus 10 is a device operated by a worker W and calibrating each pH sensor CS. For example, the calibration apparatus 10 is installed in a laboratory, a plant, or the like that handles an aqueous solution as the object to be measured. Note that the pH sensor calibration system 100 illustrated in FIG. 1 may include a plurality of the calibration apparatuses 10. In addition, in the example of FIG. 1, the calibration apparatus 10 implemented by a liquid analyzer/converter is illustrated, but the calibration apparatus 10 is not particularly limited as long as the calibration apparatus 10 is a device capable of referring to an analog value as in the liquid analyzer/converter. Furthermore, the calibration apparatus 10 may be implemented by a desktop personal computer (PC), a laptop PC, a smartphone, a server device, a cloud system, or the like through digital communication via a device that converts an analog value into a digital value.

1-1-2. pH sensor CS

The pH sensors CS (CS-1 and CS-2) are each a sensor that measures the pH of an aqueous solution as the object to be measured, by using a glass electrode method. For example, the pH sensors CS (CS-1 and CS-2) measure the pHs of different aqueous solutions, and measured values are displayed on a monitor of the calibration apparatus 10.

1-1-3. Worker W

The worker W is an administrator of a laboratory, a plant, or the like who handles aqueous solutions as the objects to be measured, and performs calibration of the pH sensors CS (CS-1 and CS-2) by operating the calibration apparatus 10.

1-1-4. Various liquids L

The various liquids L (first cleaning liquid L1, zero point buffer L2, second cleaning liquid L3, and slope point buffer L4) are liquids used by the worker W, for calibration of the pH sensors CS. Here, the first cleaning liquid L1 is, for example, pure water, and is a liquid used for cleaning each of the pH sensors CS before zero point calibration. Furthermore, the zero point buffer L2 is, for example, a buffer solution of approximately pH 7, and is a pH standard solution used for measuring an offset value O. Furthermore, the second cleaning liquid L3 is, for example, pure water, and is a liquid used for cleaning each pH sensor CS before slope point calibration. The slope point buffer L4 is, for example, a buffer solution of approximately pH 4, and is a pH standard solution used for measuring a slope value S.

1-2. Exemplary process of pH sensor calibration system 100

An exemplary process of the pH sensor calibration system 100 will be described with reference to FIG. 1. Hereinafter, a first cleaning process, a first calibration process, a second cleaning process, and a second calibration process will be described. Note that the following processes (1) to (4) can be performed in different orders. In addition, there may be a process omitted from among the following processes (1) to (4).

1-2-1. First cleaning process

Firstly, the worker W uses the first cleaning liquid L1 to clean a first pH sensor CS-1 (simply referred to as "pH sensor CS-1", as appropriate) and a second pH sensor CS-2 (simply referred to as "pH sensor CS-2" as appropriate) (see FIG. 1 (1)). For example, before zero point calibration, the worker W uses pure water as the first cleaning liquid L1 to clean the pH sensor CS-1 and the pH sensor CS-2. Furthermore, the worker W can also use tap water or a measurement liquid, as the first cleaning liquid L1.

1-2-2. First calibration process

Secondly, the worker W uses the zero point buffer L2 to calibrate the pH sensor CS-1 and the pH sensor CS-2 (see FIG. 1 (2)). For example, the worker W uses a neutral standard solution of approximately pH7 as the zero point buffer L2 to calibrate the pH sensor CS-1 and the pH sensor CS-2 in parallel.
At this time, first, the worker W simultaneously immerses the pH sensor CS-1 and the pH sensor CS-2 in the zero point buffer L2 in the same container. Next, the worker W waits for stabilization of a measured value of the zero point measured by each of the pH sensor CS-1 and the pH sensor CS-2. Then, the worker W checks the stability of the measured value of the zero point measured by each of the pH sensor CS-1 and the pH sensor CS-2, and operates the calibration apparatus 10 to record the measured value. Here, the calibration apparatus 10 manages the pH sensor CS-1 and the pH sensor CS-2 so as to perform two zero point calibrations in parallel.

1-2-3. Second cleaning process

Thirdly, the worker W uses the second cleaning liquid L3 to clean the pH sensor CS-1 and the pH sensor CS-2 (see FIG. 1 (3)). For example, the worker W uses pure water as the second cleaning liquid L3, before slope point calibration to clean the pH sensor CS-1 and the pH sensor CS-2. Furthermore, the worker W can also use tap water or a measurement liquid as the second cleaning liquid L3.

1-2-4. Second calibration process

Fourthly, the worker W uses the slope point buffer L4 to calibrate the pH sensor CS-1 and the pH sensor CS-2 (see FIG. 1 (4)). For example, the worker W uses an acidic standard solution of approximately pH4 as the slope point buffer L4 to calibrate the pH sensor CS-1 and the pH sensor CS-2 in parallel.
At this time, first, the worker W immerses the pH sensor CS-1 and the pH sensor CS-2 in the slope point buffer L4 in the same container. Next, the worker W waits for stabilization of a measured value of a slope point measured by each of the pH sensor CS-1 and the pH sensor CS-2. Then, the worker W checks the stability of the measured value of the slope point measured by each of the pH sensor CS-1 and the pH sensor CS-2, and operates the calibration apparatus 10 to record the measured value. Here, the calibration apparatus 10 manages the pH sensor CS-1 and the pH sensor CS-2 so as to perform two slope point calibrations in parallel.

1-2-5. Others

In FIG. 1 (1) to FIG. 1 (4), the exemplary process has been illustrated in which the neutral standard solution and the acidic standard solution are used in this order, as two-point calibration of the pH sensors CS, but the types and order of the pH standard solutions are not particularly limited. For example, in the pH sensor calibration system 100, the calibration apparatus 10 is configured to use two pH standard solutions selected from among the neutral standard solution, the acidic standard solution, and a basic standard solution. In the pH sensor calibration system 100, the calibration apparatus 10 is configured to use the selected two pH standard solutions for calibration in any order. Furthermore, in the pH sensor calibration system 100, the calibration apparatus 10 does not need to select pH standard solutions having different liquid properties, and two types of neutral standard solutions having different pHs, two types of acidic standard solutions having different pHs, two types of basic standard solutions having different pHs, or the like can also be selected, as long as an appropriate calibration curve can be created.

In addition, in FIG. 1 (1) to FIG. 1 (4), the exemplary process has been illustrated in which the two-point calibrations of the two pH sensors CS is performed in parallel has been illustrated, but the number of pH sensors CS and the type of calibration are not particularly limited. For example, in the pH sensor calibration system 100, the calibration apparatus 10 is configured to manage three or more pH sensors CS to perform calibrations thereof in parallel. In addition, in the pH sensor calibration system 100, the calibration apparatus 10 is also allowed to adopt one-point calibration or three-point calibration in terms of the type of calibration.

1-3. Overview and problems of pH sensor calibration system 100P

Hereinafter, an overview and problems of a pH sensor calibration system 100P according to a reference technology will be described.

1-3-1. Overview of pH sensor calibration system 100P

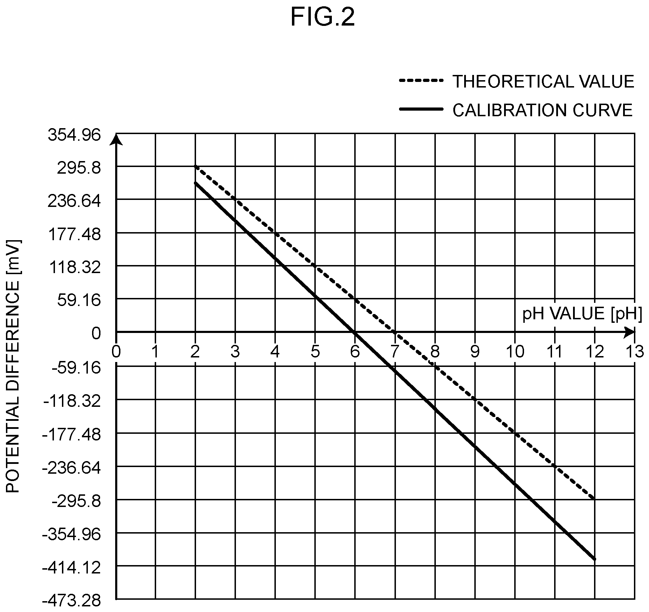

An overview of the pH sensor calibration system 100P according to the reference technology will be described with reference to FIGS. 2 to 4 and a formula. Hereinafter, a calibration principle and a calibration procedure in the pH sensor calibration system 100P, and time variation in measured value during calibration will be described.

1-3-1-1. Calibration principle

The calibration principle of the pH sensor calibration system 100P according to the reference technology will be described with reference to FIG. 2 and the formula. FIG. 2 is a graph illustrating a relationship between a potential difference between electrodes of the pH sensor calibration system 100P and pH, according to the reference technology. Hereinafter, the basic principle of the pH sensor CS, a specific example of a calibration curve, and the basic principle of two-point calibration will be described.

Basic principle of pH sensor CS

Firstly, the basic principle of the pH sensor CS will be described. The pH sensor CS is a sensor that measures a pH value of a target aqueous solution. As a measurement method for the pH sensor CS, the glass electrode method is known. The glass electrode method is a measurement method using a proportional relationship between a potential difference between two electrodes in the pH sensor CS and the pH value of the object to be measured.

Specific Example of calibration curve

Secondly, a specific example of the calibration curve will be described. When measuring pH by using the glass electrode method, the worker W needs to calibrate the pH sensor CS periodically. For example, in two-point calibration which will be described below, the worker W performs calibration by using two kinds of pH standard solutions such as buffer solutions whose pH values are known, and determines the calibration curve.

As indicated by a broken line in FIG. 2, in the relationship between the potential difference between the electrodes and pH, a theoretical value shows that when a solution is at 25°C, an electromotive force of 59.16 mV is generated when pH changes by 1, and a potential difference of 0 mV is indicated when the solution is at pH7. Meanwhile, an actually measured value is different from the theoretical value. Therefore, as indicated by a solid line in FIG. 2, the worker W creates the calibration curve by performing calibration at two or more points, on the basis of the proportional relationship between the pH value and the potential difference.

Basic principle of two-point calibration

Thirdly, the basic principle of two-point calibration will be described. First, for zero point calibration, the worker W immerses the pH sensor CS in the zero point buffer L2 (neutral standard solution of approximately pH 7), and measures the offset value O that represents a potential difference between the electrodes. Next, for slope point calibration, the worker W immerses the pH sensor CS in the slope point buffer L4 (acidic standard solution around pH 4), and measures the slope value S that represents a potential difference between the electrodes. Then, for calculation of the slope, the worker W calculates a slope% SL (indicating the sensitivity of the pH sensor CS) that represents a goodness of fit with the theoretical value, from the offset value O and the slope value S, and creates the calibration curve. Note that a slope calculation formula is expressed by the following formula (1).

$$\%SL = \frac{\left\{\dfrac{(S-O)_{[mV]}}{(pH \text{ measurement value at } S-7)_{[pH]}}\right\}}{59.16_{[mV/pH]}} \times 100 \qquad \cdots (1)$$

1-3-1-2. Calibration procedure

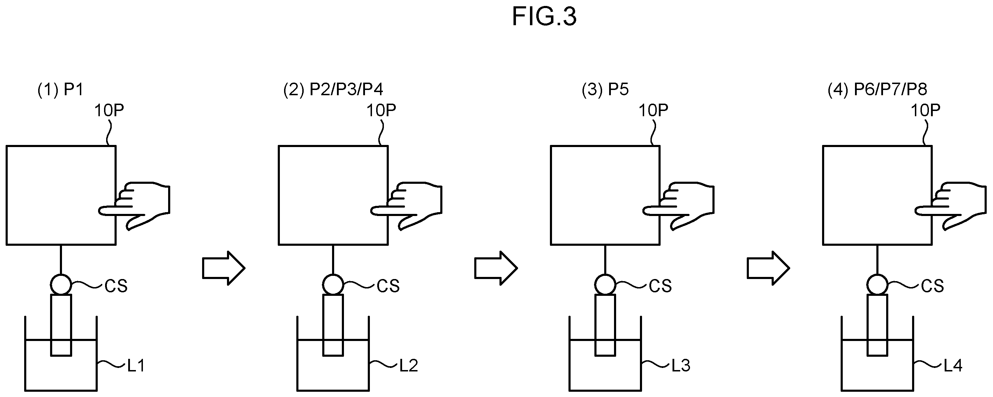

The calibration procedure of the pH sensor calibration system 100P according to a reference technology will be described with reference to FIG. 3. FIG. 3 is a diagram illustrating steps of a procedure in the pH sensor calibration system 100P according to the reference technology. Hereinafter, a calibration apparatus 10P of the pH sensor calibration system 100P according to the reference technology and a specific example of the calibration procedure of the pH sensor calibration system 100P will be described.

Calibration device 10P

Firstly, the calibration apparatus 10P will be described. The calibration apparatus 10P has a human machine interface (HMI) display function and a calibration function. The calibration apparatus 10P is configured to call the calibration function that is independent for each pH sensor CS by using the HMI display function. Furthermore, the calibration apparatus 10P is configured to perform calibration of the pH sensor CS by using the calibration function. For example, the calibration apparatus 10P is connected to the pH sensor CS through serial communication, and is configured to perform control of the pH sensor CS including calibration of the pH sensor CS, through operation of the calibration apparatus 10P by the worker W. In addition, the calibration apparatus 10P performs control of the pH sensors CS including calibration of the pH sensors CS, one by one.

Specific example of calibration procedure

Secondly, the specific example of the calibration procedure will be described. First, as illustrated in FIG. 3 (1), the worker W immerses the pH sensor CS in the first cleaning liquid L1 such as pure water, and cleans the pH sensor CS (procedure step P1). Next, as illustrated in FIG. 3 (2), the worker W immerses the pH sensor CS in the zero point buffer L2 that is the neutral standard solution (procedure step P2), waits for stabilization of a measured value of the zero point measured by the pH sensor CS (procedure step P3), and operates the calibration apparatus 10P to record the measured value after stabilization of the measured value of the zero point (procedure step P4). As illustrated in FIG. 3 (3), the worker W immerses the pH sensor CS in the second cleaning liquid L3 such as pure water, and cleans the pH sensor CS (procedure step P5). Then, as illustrated in FIG. 3 (4), the worker W immerses the pH sensor CS in the slope point buffer L4 that is an acidic standard solution (procedure step P6), waits for stabilization of a measured value of a slope point measured by the pH sensor CS (procedure step P7), and operates the calibration apparatus 10P to record the measured value after stabilization of the measured value of the slope point (procedure step P8).

1-3-1-3. Time variation in measured value during calibration

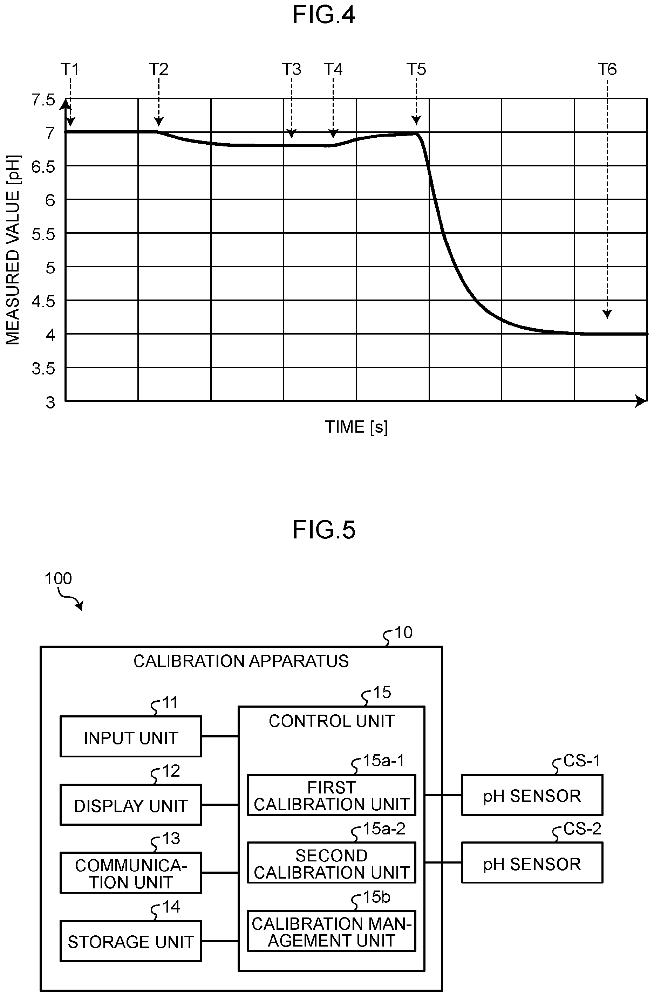

The time variation in measured value during calibration of the pH sensor calibration system 100P according to a reference technology will be described with reference to FIG. 4. FIG. 4 is a diagram illustrating the time variation in measured value during calibration of the pH sensor calibration system 100P according to the reference technology. Hereinafter, measured values at time T1 to time T6 will be described.

Time T1

Firstly, a measured value at the time T1 will be described. T1 in FIG. 4 indicates a measured value before the start of calibration, and indicates a state in which the pH sensor CS is immersed in the first cleaning liquid L1 such as pure water.

Time T2

Secondly, a measured value at the time T2 will be described. T2 in FIG. 4 indicates a state in which the pH sensor CS is immersed in the zero point buffer L2 that is the neutral standard solution (pH 6.8).

Time T3

Thirdly, a measured value at the time T3 will be described. T3 in FIG. 4 indicates a state in which the measured value of the zero point measured by the pH sensor CS is stable. At this time, the worker W operates the calibration apparatus 10P to record the measured value of the zero point.

Time T4

Fourthly, a measured value at the time T4 will be described. T4 in FIG. 4 indicates a state in which the pH sensor CS is taken out from the zero point buffer L2 and immersed in the second cleaning liquid L3 such as pure water.

Time T5

Fifthly, a measured value at the time T5 will be described. T5 in FIG. 4 indicates a state in which the pH sensor CS is immersed in the slope point buffer L4 that is an acidic standard solution (pH 4.0).

(Time T6)

Sixthly, a measured value at the time T6 will be described. T6 in FIG. 4 indicates a state in which the measured value of the slope point measured by the pH sensor CS is stable. At this time, the worker W operates the calibration apparatus 10P to record the measured value of the slope point.

1-3-1-4. Others

The overview of the pH sensor calibration system 100P described above shows the two-point calibration, but the same applies to three-point calibration, one-point calibration, and the like. The basic principle of the three-point calibration and the basic principle of the one-point calibration will be described below.

Basic principle of three-point calibration

First, for zero point calibration, the worker W immerses the pH sensor CS in the zero point buffer L2 (neutral standard solution of approximately pH 7), and measures the offset value O that represents a potential difference between the electrodes. Next, for slope point calibration in an acidic region, the worker W immerses the pH sensor CS in the slope point buffer L4 (acidic standard solution around pH 4), and measures the slope value S that represents a potential difference between the electrodes. In addition, for slope point calibration in a basic region, the worker W immerses the pH sensor CS in a slope point buffer L5 (basic standard solution around pH 10), and measures a slope value S' that represents a potential difference between the electrodes. Then, for calculation of the slope, the worker W calculates the slope% SL that represents the goodness of fit with the theoretical value, from the offset value O, the slope value S, and the slope value S', and creates a calibration curve.

Basic Principle of one-point calibration

First, for zero point calibration, the worker W immerses the pH sensor CS in the zero point buffer L2 (neutral standard solution of approximately pH 7), and measures the offset value O that represents a potential difference between the electrodes. Then, the worker W creates a calibration curve from the offset value O and the theoretical value.

1-3-2. Problems of pH sensor calibration system 100P

Problems of the pH sensor calibration system 100P according to a reference technology will be described. As described in (1-3-1-3. Time variation in measured value during calibration) above, in the pH sensor calibration system 100P, when two-point calibration is performed for one pH sensor CS, the measured value greatly changes particularly from the time T5 to the time T6, and it takes a long time for stabilization of the measured value. Furthermore, in the pH sensor calibration system 100P, the calibration apparatus 10P is required to calibrate the pH sensors CS one by one.

Therefore, the pH sensor calibration system 100P has the following problems. Firstly, in the pH sensor calibration system 100P, when it is desired to calibrate two or more pH sensors CS, there is a problem that a time approximately proportional to the number of pH sensors CS is required as compared with calibration of only one pH sensor CS. Secondly, in the pH sensor calibration system 100P, when it is desired to calibrate two or more pH sensors CS, there is a problem that man-hours increases as compared with the calibration of only one pH sensor CS and a burden on the worker W increases. Thirdly, in the pH sensor calibration system 100P, when it is desired to calibrate two or more pH sensors CS, there is a problem that more pH standard solution to be used for calibration is required as compared with calibration of only one pH sensor CS.

1-4. Overview and effects of pH sensor calibration system 100

Hereinafter, an overview and effects of the pH sensor calibration system 100 according to an embodiment will be described.

1-4-1. Overview of pH sensor calibration system 100

An overview of the pH sensor calibration system 100 according to an embodiment will be described. In the pH sensor calibration system 100, the following process is performed. Firstly, the worker W uses the first cleaning liquid L1 such as pure water to clean the pH sensor CS-1 and the pH sensor CS-2. Secondly, the worker W uses the zero point buffer L2 as the neutral standard solution to calibrate the pH sensor CS-1 and the pH sensor CS-2 in parallel. At this time, the calibration apparatus 10 manages the pH sensor CS-1 and the pH sensor CS-2 so as to perform two zero point calibrations in parallel. Thirdly, the worker W uses the second cleaning liquid L3 such as pure water to clean the pH sensor CS-1 and the pH sensor CS-2. Fourthly, the worker W uses the slope point buffer L4 as the acidic standard solution or the like to calibrate the pH sensor CS-1 and the pH sensor CS-2 in parallel. At this time, the calibration apparatus 10 manages the pH sensor CS-1 and the pH sensor CS-2 so as to perform two slope point calibrations in parallel.

1-4-2. Effect of pH sensor calibration system 100

The effects of the pH sensor calibration system 100 according to an embodiment will be described. Firstly, management of calibration of each of two or more pH sensors CS in parallel, that is, simultaneously by the calibration apparatus 10 makes it possible to effectively reduce the time required for calibration. Secondly, management of calibration of each of two or more pH sensors CS in parallel, that is, simultaneously by the calibration apparatus 10 makes it possible to effectively reduce the man-hours required for calibration by the worker W such as replacement of various liquids L and reduce the burden on the worker W. Thirdly, management of calibration of each of two or more pH sensors CS in parallel, that is, simultaneously by the calibration apparatus 10 makes it possible to effectively reduce the amount of pH standard solution that is susceptible to pH variation and is difficult to be used again.

2. Configuration and process of each device of pH sensor calibration system 100

The configuration and process of each device included in the pH sensor calibration system 100 illustrated in FIG. 1 will be described with reference to FIG. 5. FIG. 5 is a block diagram illustrating an exemplary configuration of each device of the pH sensor calibration system 100 according to an embodiment. Hereinafter, descriptions will be made of an exemplary entire configuration of the pH sensor calibration system 100 according to the embodiment, an exemplary configuration and an exemplary process of the calibration apparatus 10, and an exemplary configuration and an exemplary process of the pH sensor CS.

2-1. Exemplary entire configuration of pH sensor calibration system 100

The exemplary entire configuration of the pH sensor calibration system 100 illustrated in FIG. 1 will be described with reference to FIG. 5. As illustrated in FIG. 5, the pH sensor calibration system 100 includes the calibration apparatus 10 and the pH sensors CS (CS-1 and CS-2). Furthermore, the calibration apparatus 10 and the pH sensors CS are connected through, for example, serial communication. Furthermore, the calibration apparatus 10 is communicably connected to each of various devices, which are not illustrated, via a predetermined communication network, which is not illustrated, in a wired or wireless manner. Note that various communication networks such as the Internet and a dedicated line are allowed to be adopted, for the predetermined communication network.

2-2. Exemplary configuration and exemplary process of calibration apparatus 10

The exemplary configuration and the exemplary process of the calibration apparatus 10 will be described with reference to FIG. 5. The calibration apparatus 10 is implemented by, for example, the liquid analyzer/converter that enables water quality management, plant management, plant control, and water pollution analysis. The calibration apparatus 10 includes an input unit 11, a display unit 12, a communication unit 13, a storage unit 14, and a control unit 15.

2-2-1. Input unit 11

The input unit 11 is configured to input various information to the calibration apparatus 10. For example, the input unit 11 is implemented by a touch screen or the like, and receives input of various information to the calibration apparatus 10.

2-2-2. Display unit 12

The display unit 12 is configured to display various information from the calibration apparatus 10. For example, the display unit 12 is implemented by a display or the like, and displays various information stored in the calibration apparatus 10.

2-2-3. Communication unit 13

The communication unit 13 is configured to perform data communication with another device. For example, the communication unit 13 enables data communication with a terminal or a higher-order system, which are not illustrated, via a router or the like, for various processes described later.

2-2-4. Storage unit 14

The storage unit 14 stores various information referred to upon operation of the control unit 15 and various information acquired during operation of the control unit 15. Here, the storage unit 14 can be implemented by, for example, a storage device 10b that is a semiconductor memory element such as a random access memory (RAM) or a flash memory, a nonvolatile memory such as a hard disk or an optical disk, or the like. Note that in the example of FIG. 5, the storage unit 14 is installed inside the calibration apparatus 10, but may be installed outside the calibration apparatus 10, or a plurality of storage units may be installed.

2-2-5. Control unit 15

The control unit 15 is configured to control the entire calibration apparatus 10. The control unit 15 includes a first calibration unit 15a-1, a second calibration unit 15a-2, and a calibration management unit 15b. Here, the control unit 15 can be implemented by, for example, an electronic circuit such as a central processing unit (CPU) or a micro processing unit (MPU), or an integrated circuit such as an application specific integrated circuit (ASIC) or a field programmable gate array (FPGA).

The control unit 15 includes the first calibration unit 15a-1 connected to the first pH sensor CS-1. In addition, the control unit 15 includes the second calibration unit 15a-2 connected to the second pH sensor CS-2. Similarly, the control unit 15 can include calibration units 15a the number of which corresponds to the number of pH sensors CS for which calibration is desired in parallel, such as a third calibration unit 15a-3 connected to a third pH sensor CS-3, a fourth calibration unit 15a-4 connected to a fourth pH sensor CS-4, and ⋯.

2-2-5-1. First calibration unit 15a-1

The first calibration unit 15a-1 calibrates the first pH sensor CS-1 that measures the pH of an aqueous solution. Here, the first pH sensor CS-1 is, for example, a sensor that measures the pH of an aqueous solution by using the glass electrode method. For example, the first calibration unit 15a-1 calibrates the first pH sensor CS-1 by one-point calibration. In addition, the first calibration unit 15a-1 calibrates the first pH sensor CS-1 by two-point calibration. In addition, the first calibration unit 15a-1 calibrates the first pH sensor CS-1 by three-point calibration. Note that the first calibration unit 15a-1 may store a result of the calibration of the first pH sensor CS-1 in the storage unit 14.

In a specific example, the first calibration unit 15a-1 performs independent pH measurement of the first pH sensor CS-1 immersed in the pH standard solution, and stores a potential difference corresponding to the pH standard solution upon stabilization of pH, in the storage unit 14. In addition, in calibration of the first pH sensor CS-1, the first calibration unit 15a-1 creates a calibration curve indicating a relationship between a potential difference and pH, used for pH measurement of the first pH sensor CS-1.

2-2-5-2. Second calibration unit 15a-2

The second calibration unit 15a-2 calibrates the second pH sensor CS-2 that measures the pH of an aqueous solution. Here, the second pH sensor CS-2 is a sensor different from the first pH sensor CS-1. The second pH sensor CS-2 is, for example, a sensor that measures the pH of an aqueous solution by using the glass electrode method. For example, the second calibration unit 15a-2 calibrates the second pH sensor CS-2 by one-point calibration. In addition, the second calibration unit 15a-2 calibrates the second pH sensor CS-2 by two-point calibration. In addition, the second calibration unit 15a-2 calibrates the second pH sensor CS-2 by three-point calibration. Note that the second calibration unit 15a-2 may store a result of the calibration of the second pH sensor CS-2 in the storage unit 14.

In a specific example, the second calibration unit 15a-2 performs independent pH measurement of the second pH sensor CS-2 immersed in the pH standard solution, and stores a potential difference corresponding to the pH standard solution upon stabilization of pH, in the storage unit 14. In addition, in calibration of the second pH sensor CS-2, the second calibration unit 15a-2 creates a calibration curve indicating a relationship between a potential difference and pH, used for pH measurement of the second pH sensor CS-2.

2-2-5-3. Calibration management unit 15b

The calibration management unit 15b manages calibration of the first pH sensor CS-1 and the second pH sensor CS-2. For example, when both of the first pH sensor CS-1 and the second pH sensor CS-2 are immersed in a pH standard solution indicating a predetermined pH, the calibration management unit 15b manages the first pH sensor CS-1 and the second pH sensor CS-2 so as to enable the calibrations thereof in parallel. Hereinafter, specific examples of a one-point calibration management process, a two-point calibration management process, a three-point calibration management process, and the pH standard solution will be described, as a calibration management process executed by the calibration management unit 15b.

One-point calibration management process

The calibration management unit 15b performs the one-point calibration management process. For example, the calibration management unit 15b manages the first pH sensor CS-1 and the second pH sensor CS-2 so as to enable one-point calibrations thereof in parallel. At this time, the pH standard solution used for each of the one-point calibrations is one of a neutral standard solution being a standard of neutrality, an acidic standard solution being a standard of acidity, and a basic standard solution being a standard of basicity.

In a specific example of the one-point calibration management process, when an aqueous solution measured by each of the first pH sensor CS-1 and the second pH sensor CS-2 has a liquid property in a neutral region (pH of approximately 6 to 8), the calibration management unit 15b independently performs pH measurement of the first pH sensor CS-1 and the second pH sensor CS-2 immersed in, for example, the neutral standard solution indicating a pH of 6.8 at 25°C. In addition, the calibration management unit 15b causes the storage unit 14 to store potential differences upon stabilization of pH. Then, the calibration management unit 15b uses each of the measured potential differences, and a theoretical value indicating a relationship between pH and the potential difference to create a calibration curve for each of the first pH sensor CS-1 and the second pH sensor CS-2 in the neutral region.

In addition, when an aqueous solution measured by each of the first pH sensor CS-1 and the second pH sensor CS-2 has a liquid property in an acidic region (pH of approximately 0 to 6), the calibration management unit 15b independently performs pH measurement of the first pH sensor CS-1 and the second pH sensor CS-2 immersed in, for example, an acidic standard solution indicating a pH of 4.0 at 25°C. In addition, the calibration management unit 15b causes the storage unit 14 to store potential differences upon stabilization of pH. Then, the calibration management unit 15b uses each of the measured potential differences, and a theoretical value indicating a relationship between pH and the potential difference to create a calibration curve for each of the first pH sensor CS-1 and the second pH sensor CS-2 in the acidic region.

In addition, when an aqueous solution measured by each of the first pH sensor CS-1 and the second pH sensor CS-2 has a liquid property in a basic region (pH of approximately 8 to 14), the calibration management unit 15b independently performs pH measurement of the first pH sensor CS-1 and the second pH sensor CS-2 immersed in, for example, a basic standard solution indicating a pH of 10.0 at 25°C. In addition, the calibration management unit 15b causes the storage unit 14 to store potential differences upon stabilization of pH. Then, the calibration management unit 15b uses each of the measured potential differences, and a theoretical value indicating a relationship between pH and the potential difference to create a calibration curve for each of the first pH sensor CS-1 and the second pH sensor CS-2 in the basic region.

Two-point calibration management process

The calibration management unit 15b performs the two-point calibration management process. For example, the calibration management unit 15b manages the first pH sensor CS-1 and the second pH sensor CS-2 so as to enable two-point calibrations thereof in parallel. At this time, the pH standard solutions used for each of the two-point calibrations are two of the neutral standard solution being a standard of neutrality, the acidic standard solution being a standard of acidity, and the basic standard solution being a standard of basicity.

In a specific example of the two-point calibration management process, when an aqueous solution measured by each of the first pH sensor CS-1 and the second pH sensor CS-2 has a liquid property in a neutral region to a weakly acidic region (pH of approximately 2 to 8), the calibration management unit 15b first independently performs pH measurement of the first pH sensor CS-1 and the second pH sensor CS-2 immersed in, for example, a neutral standard solution indicating a pH of 6.8 at 25°C, and causes the storage unit 14 to store the respective potential differences upon stabilization of pH. Next, the calibration management unit 15b independently performs pH measurement of the first pH sensor CS-1 and the second pH sensor CS-2 immersed in, for example, the acidic standard solution indicating a pH of 4.0 at 25°C, and causes the storage unit 14 to store the respective potential differences upon stabilization of pH. Then, the calibration management unit 15b creates a calibration curve for each of the first pH sensor CS-1 and the second pH sensor CS-2 in the neutral region to the weakly acidic region.

In addition, when an aqueous solution measured by each of the first pH sensor CS-1 and the second pH sensor CS-2 has a liquid property in a neutral region to a weakly basic region (pH of approximately 6 to 12), the calibration management unit 15b first independently performs pH measurement of the first pH sensor CS-1 and the second pH sensor CS-2 immersed in, for example, a neutral standard solution indicating a pH of 6.8 at 25°C, and causes the storage unit 14 to store the respective potential differences upon stabilization of pH. Next, the calibration management unit 15b independently performs pH measurement of the first pH sensor CS-1 and the second pH sensor CS-2 immersed in, for example, the basic standard solution indicating a pH of 10.0 at 25°C, and causes the storage unit 14 to store the respective potential differences upon stabilization of pH. Then, the calibration management unit 15b creates a calibration curve for each of the first pH sensor CS-1 and the second pH sensor CS-2 in the neutral region to the weakly basic region.

Note that the calibration management unit 15b can also use pH standard solutions having the same liquid property, for the two-point calibration management process. In other words, the calibration management unit 15b can also use, for example, the neutral standard solution having a pH of 6.8 and a neutral standard solution having a pH of 7.4 to perform the two-point calibration management process. In addition, the calibration management unit 15b can also use, for example, an acidic standard solution having a pH of 1.7 and the acidic standard solution having a pH of 4.0 to perform the two-point calibration management process. In addition, the calibration management unit 15b can also use, for example, a basic standard solution having a pH of 9.2 and the basic standard solution having a pH of 10.0 to perform the two-point calibration management process.

Three-point calibration management process

The calibration management unit 15b performs the three-point calibration management process. For example, the calibration management unit 15b manages the first pH sensor CS-1 and the second pH sensor CS-2 so as to enable three-point calibrations thereof in parallel. At this time, the pH standard solutions used for each of the three-point calibrations are the neutral standard solution being a standard of neutrality, the acidic standard solution being a standard of acidity, and the basic standard solution being a standard of basicity.

In a specific example of the three-point calibration management process, when an aqueous solution measured by each of the first pH sensor CS-1 and the second pH sensor CS-2 has a liquid property in a wide range from a weakly basic region to a weakly acidic region (pH of approximately 2 to 12), the calibration management unit 15b first independently performs pH measurement of the first pH sensor CS-1 and the second pH sensor CS-2 immersed in, for example, a neutral standard solution indicating a pH of 6.8 at 25°C, and causes the storage unit 14 to store the respective potential differences upon stabilization of pH. Next, the calibration management unit 15b independently performs pH measurement of the first pH sensor CS-1 and the second pH sensor CS-2 immersed in, for example, the acidic standard solution indicating a pH of 4.0 at 25°C, and causes the storage unit 14 to store the respective potential differences upon stabilization of pH. Furthermore, the calibration management unit 15b independently performs pH measurement of the first pH sensor CS-1 and the second pH sensor CS-2 immersed in, for example, the basic standard solution indicating a pH of 10.0 at 25°C, and causes the storage unit 14 to store the respective potential differences upon stabilization of pH.
Then, the calibration management unit 15b creates a calibration curve for each of the first pH sensor CS-1 and the second pH sensor CS-2 in the weakly basic region to the weakly acidic region.

Note that the calibration management unit 15b can also use pH standard solutions having the same liquid property, for the three-point calibration management process. In other words, the calibration management unit 15b can also use the neutral standard solution having a pH of 6.8 and the neutral standard solution having a pH of 7.4 for two of the three points to perform the three-point calibration management process. In addition, the calibration management unit 15b can also use, for example, the acidic standard solution having a pH of 1.7 and the acidic standard solution having a pH of 4.0 for two of the three points to perform the three-point calibration management process. In addition, the calibration management unit 15b can also use, for example, the basic standard solution having a pH of 9.2 and the basic standard solution having a pH of 10.0 for two of the three points to perform the three-point calibration management process.

Specific Example of pH standard solution

Here, a specific example of the pH standard solution used for calibration will be described. Hereinafter, the neutral standard solution being a standard of neutrality, the acidic standard solution being a standard of acidity, and the basic standard solution being a standard of basicity will be described.

Neutral standard solution

The neutral standard solution is a neutral phosphate pH standard solution or a phosphate pH standard solution. The neutral standard solution is, for example, a neutral phosphate pH standard solution having a pH of 6.86 at 25°C, and is a buffer solution containing 0.025 mol/kg of potassium dihydrogen phosphate and 0.025 mol/kg of disodium hydrogen phosphate. Furthermore, the neutral standard solution is, for example, a phosphate pH standard solution having a pH of 7.41 at 25°C, and is a buffer solution containing 0.008695 mol/kg of potassium dihydrogen phosphate and 0.03043 mol/kg of disodium hydrogen phosphate.

Acidic standard solution

The acidic standard solution is an oxalate pH standard solution or a phthalate pH standard solution. The acidic standard solution is, for example, an oxalate pH standard solution having a pH of 1.68 at 25°C, and is a buffer solution containing 0.05 mol/kg of potassium trihydrogen dioxalate. Furthermore, the acidic standard solution is, for example, a phthalate pH standard solution having a pH of 4.01 at 25°C, and is a buffer solution containing 0.05 mol/kg of potassium hydrogen phthalate.

Basic standard solution

The basic standard solution is a borate pH standard solution or a carbonate pH standard solution. The basic standard solution is, for example, a borate pH standard solution having a pH of 9.18 at 25°C, and is a buffer solution containing 0.01 mol/kg of sodium borate. In addition, the basic standard solution is, for example, a carbonate pH standard solution having a pH of 10.01 at 25°C, and is a buffer solution containing 0.025 mol/kg of sodium hydrogen carbonate and 0.025 mol/kg of sodium carbonate.

2-3. Exemplary configuration and exemplary process of pH sensor CS

The exemplary configuration and the exemplary process of each of the pH sensors CS will be described with reference to FIG. 5. Each pH sensor CS is implemented by a sensor that measures the pH of an aqueous solution by using the glass electrode method. For example, the pH sensors CS includes the first pH sensor CS-1 and the second pH sensor CS-2.

2-3-1. First pH sensor CS-1

The first pH sensor CS-1 is connected to the first calibration unit 15a-1 and controlled by the first calibration unit 15a-1 through serial communication. At this time, the first pH sensor CS-1 is connected to the first calibration unit 15a-1, and is also allowed to directly refer to the analog values (examples: voltage value and current value). For example, the first pH sensor CS-1 detects a potential difference corresponding to the pH of an aqueous solution in which the first pH sensor CS-1 is immersed, according to an instruction from the first calibration unit 15a-1, and outputs the detected potential difference to the first calibration unit 15a-1.

2-3-2. Second pH sensor CS-2

The second pH sensor CS-2 is connected to the second calibration unit 15a-2 and controlled by the second calibration unit 15a-2 through serial communication. At this time, the second pH sensor CS-2 is connected to the second calibration unit 15a-2, and is also allowed to directly refer to the analog values (examples: voltage value and current value). For example, the second pH sensor CS-2 detects a potential difference corresponding to the pH of an aqueous solution in which the second pH sensor CS-2 is immersed, according to an instruction from the second calibration unit 15a-2, and outputs the detected potential difference to the second calibration unit 15a-2.

3. Specific example of process steps of pH sensor calibration system 100

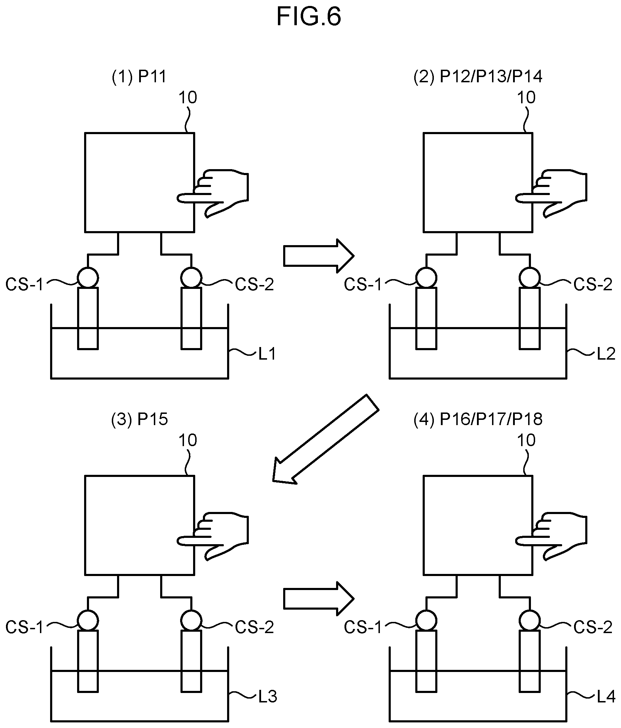

A specific example of process steps of the pH sensor calibration system 100 according to an embodiment will be described with reference to FIG. 6. FIG. 6 is a diagram illustrating the specific example of steps of a procedure in the pH sensor calibration system 100 according to the embodiment. Hereinafter, a specific example of a calibration procedure will be described.

3-1. Specific example of calibration procedure

The specific example of the calibration procedure of the pH sensor calibration system 100 according to the embodiment will be described. First, as illustrated in FIG. 6 (1), the worker W immerses the pH sensor CS-1 and the pH sensor CS-2 in the first cleaning liquid L1 such as pure water, and cleans the pH sensor CS-1 and the pH sensor CS-2 (procedure step P11). Next, as illustrated in FIG. 6 (2), the worker W immerses the pH sensor CS-1 and the pH sensor CS-2 in the zero point buffer L2 that is the neutral standard solution (procedure step P12), waits for stabilization of the measured values of the zero point measured by the pH sensor CS-1 and the pH sensor CS-2 (procedure step P13), and operates the calibration apparatus 10 to record the measured values after stabilization of the measured values of the zero point (procedure step P14). Furthermore, as illustrated in FIG. 6 (3), the worker W immerses the pH sensor CS-1 and the pH sensor CS-2 in the second cleaning liquid L3 such as pure water, and cleans the pH sensor CS-1 and the pH sensor CS-2 (procedure step P15). Then, as illustrated in FIG. 6 (4), the worker W immerses the pH sensor CS-1 and the pH sensor CS-2 in the slope point buffer L4 that is the acidic standard solution (procedure P16), waits for stabilization of the measured value of a slope point measured by each of the pH sensor CS-1 and the pH sensor CS-2 (procedure step P17), and operates the calibration apparatus 10 to record each measured value after stabilization of the measured value of the slope point (procedure step P18).

4. Process flow in pH sensor calibration system 100

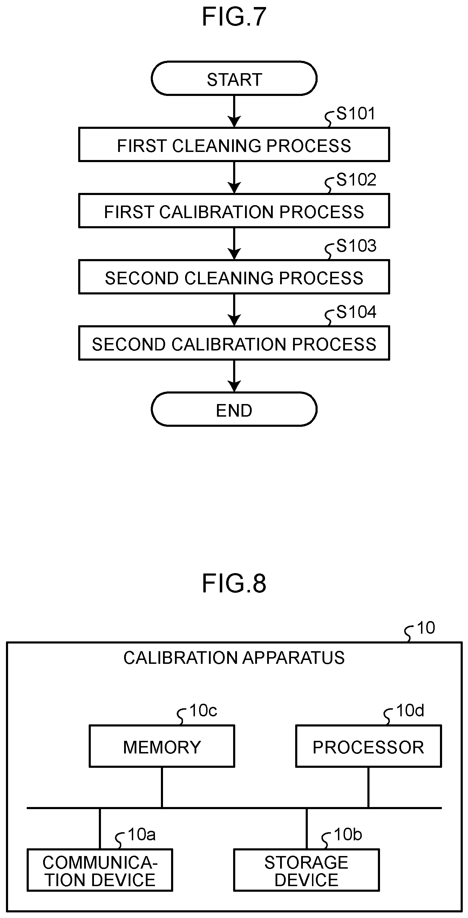

A process flow in the pH sensor calibration system 100 according to an embodiment will be described with reference to FIG. 7. FIG. 7 is a flowchart illustrating an exemplary process flow in the pH sensor calibration system 100 according to the embodiment. Note that the processes of the following Steps S101 to S104 can also be performed in a different order. In addition, any of the processes of the following Steps S101 to S104 may be omitted.

4-1. First cleaning process

Firstly, the pH sensor calibration system 100 performs the first cleaning process (Step S101). For example, before zero point calibration, the worker W uses pure water as the first cleaning liquid L1 to clean the pH sensor CS-1 and the pH sensor CS-2.

4-2. First calibration process

Secondly, the pH sensor calibration system 100 performs the first calibration process (Step S102). For example, the calibration apparatus 10 uses the neutral standard solution of approximately pH7 as the zero point buffer L2 to perform two zero point calibrations of the pH sensor CS-1 and the pH sensor CS-2 in parallel.

4-3. Second cleaning process

Thirdly, the pH sensor calibration system 100 performs the second cleaning process (Step S103). For example, the worker W uses pure water as the second cleaning liquid L3, before slope point calibration to clean the pH sensor CS-1 and the pH sensor CS-2.

4-4. Second calibration process

Fourthly, the pH sensor calibration system 100 performs the second calibration process (Step S104). For example, the calibration apparatus 10 uses the acidic standard solution of approximately pH4 as the slope point buffer L4 to perform two slope point calibrations of the pH sensor CS-1 and the pH sensor CS-2 in parallel.

5. Effects of embodiment

Finally, effects of the embodiment will be described. Hereinafter, first to eighth effects corresponding to the processes according to the embodiments will be described.

5-1. First effect

Firstly, in a process according to an embodiment described above, the calibration apparatus 10 calibrates the pH sensor CS-1 that measures the pH of an aqueous solution and calibrates the pH sensor CS-2 different from the pH sensor CS-1, and when both the pH sensor CS-1 and the pH sensor CS-2 are immersed in a pH standard solution indicating a predetermined pH, the calibration apparatus 10 manages the pH sensor CS-1 and the pH sensor CS-2 so as to enable the calibrations thereof in parallel. Therefore, in the present process, it is possible to reduce a time required for calibrations of a plurality of pH sensors CS.

5-2. Second effect

Secondly, in a process according to an embodiment described above, the pH standard solution is one of the neutral standard solution being a standard of neutrality, the acidic standard solution being a standard of acidity, and the basic standard solution being a standard of basicity, and the calibration apparatus 10 manages the pH sensor CS-1 and the pH sensor CS-2 so as to enable one-point calibrations thereof in parallel. Therefore, in the present process, it is possible to reduce a time required for one-point calibrations of a plurality of pH sensors CS.

5-3. Third effect

Thirdly, in a process according to an embodiment described above, the pH standard solutions are two of the neutral standard solution being a standard of neutrality, the acidic standard solution being a standard of acidity, and the basic standard solution being a standard of basicity, and the calibration apparatus 10 manages the pH sensor CS-1 and the pH sensor CS-2 so as to enable two-point calibrations thereof in parallel. Therefore, in the present process, it is possible to reduce a time required for two-point calibrations of a plurality of pH sensors CS.

5-4. Fourth effect

Fourthly, in a process according to an embodiment described above, the pH standard solutions are three of the neutral standard solution being a standard of neutrality, the acidic standard solution being a standard of acidity, and the basic standard solution being a standard of basicity, and the calibration apparatus 10 manages the pH sensor CS-1 and the pH sensor CS-2 so as to enable three-point calibrations thereof in parallel. Therefore, in the present process, it is possible to reduce a time required for three-point calibrations of a plurality of pH sensors CS.

5-5. Fifth effect

Fifthly, in a process according to an embodiment described above, the neutral standard solution is the neutral phosphate pH standard solution or the phosphate pH standard solution. Therefore, in the present process, it is possible to reduce a time required for calibrations of a plurality of pH sensors CS in the neutral region.

5-6. Sixth effect

Sixthly, in a process according to an embodiment described above, the acidic standard solution is the oxalate pH standard solution or the phthalate pH standard solution. Therefore, in the present process, it is possible to reduce a time required for calibrations of a plurality of pH sensors CS in the acidic region.

5-7. Seventh effect

Seventhly, in a process according to an embodiment described above, the basic standard solution is the borate pH standard solution or the carbonate pH standard solution. Therefore, in the present process, it is possible to reduce a time required for calibrations of a plurality of pH sensors CS in the basic region.

5-8. Eighth effect

Eighthly, in a process according to an embodiment described above, the pH sensor CS-1 and the pH sensor CS-2 each measure the pH of an aqueous solution by using the glass electrode method. Therefore, in the present process, it is possible to reduce a time required for calibrations of a plurality of pH sensors CS, by using a highly versatile measurement method using the glass electrode.

6. Application examples of embodiments

Application examples of the embodiments will be described. Hereinafter, first to fourth application examples of the embodiments will be described.

6-1. First application example

As the first application example of the embodiment, the present invention can also be applied to calibration of a dissolved oxygen sensor that measures the amount of dissolved oxygen in an aqueous solution, instead of the pH sensor CS.

6-2. Second application example

As the second application example of the embodiment, the present invention can also be applied to calibration of a conductivity sensor that measures conductivity of an aqueous solution, instead of the pH sensor CS.

6-3. Third application example

As the third application example of the embodiment, the present invention can also be applied to calibration of an electromagnetic conductivity sensor that measures electromagnetic conductivity of an aqueous solution, instead of the pH sensor CS.

6-4. Fourth application example

As the fourth application example of the embodiment, the present invention can also be applied to calibration of an oxidation/reduction potential sensor that measures an oxidation/reduction potential of an aqueous solution, instead of the pH sensor CS.

7. System

A process procedure, a control procedure, a specific name, and information including various data and parameters, described and illustrated in the above specification and drawings can be appropriately changed unless otherwise specified.
In addition, component elements of the devices in the drawings are functionally conceptually illustrated, and are not necessarily physically configured as illustrated in the drawings. In other words, specific forms of distribution and integration of the devices are not limited to those illustrated in the drawings. In other words, all or some of the devices can be configured by being functionally or physically distributed/integrated in any units according to various loads, usage conditions, and the like.
Furthermore, all or any of the processing functions performed in the devices can be implemented by a CPU and a program analyzed and executed by the CPU, or can be implemented as hardware using wired logic.

8. Hardware

An exemplary hardware configuration of the calibration apparatus 10 will be described. Note that the other devices can have a similar hardware configuration. FIG. 8 is a diagram illustrating an exemplary hardware configuration according to an embodiment. As illustrated in FIG. 8, the calibration apparatus 10 includes a communication device 10a, the storage device 10b, a memory 10c, and a processor 10d. Furthermore, the units illustrated in FIG. 8 are connected to each other by a bus or the like.

The communication device 10a includes a transmission line enabling communication of an analog signal, a converter enabling superimposition of a digital signal on the transmission line, a network interface card, or the like, and performs communication with another server. The communication device 10a performs functions similar to those of the communication unit 13 described with reference to FIG. 5 and the like. The storage device 10b is a semiconductor memory element such as RAM or a flash memory, a nonvolatile memory such as a hard disk or an optical disk, or the like, and stores a program or a database for operating the function of each device such as the calibration apparatus 10 illustrated in FIG. 5. The storage device 10b performs a function similar to that of the storage unit 14 described with reference to FIG. 5 and the like.

The processor 10d reads a program to perform processing similar to that of each of the processing units illustrated in FIG. 5, from the storage device 10b or the like and loads the program into the memory 10c, thereby operating a process to perform each function described with reference to FIG. 5 and the like. For example, in this process, a function similar to that of each processing unit of the calibration apparatus 10 is performed. Specifically, the processor 10d reads a program having a function similar to that of each of the first calibration unit 15a-1, the second calibration unit 15a-2, the calibration management unit 15b, and the like, from the storage device 10b or the like. Then, the processor 10d performs a process of performing processing similar to that of each of the first calibration unit 15a-1, the second calibration unit 15a-2, the calibration management unit 15b, and the like.

In this way, the calibration apparatus 10 reads and executes the program to operate as a device that performs various processing methods. Furthermore, the calibration apparatus 10 reads the program from a recording medium by a medium reading device and executes the read program to implement a function similar to that of an embodiment described above. Note that execution of programs described in the other embodiments are not limited to the execution by the calibration apparatus 10. For example, the present invention can also be similarly applied to execution of a program by another computer or server or execution of a program by the another computer and the server in cooperation.

This program can be distributed via a network such as the Internet. In addition, this program can be recorded on a computer-readable recording medium such as a hard disk, a flexible disk (FD), a CD-ROM, a magneto-optical disk (MO), or a digital versatile disc (DVD), and executed by being read from the recording medium by a computer.

According to the present invention, there is an effect to reduce the time required for calibrations of the plurality of pH sensors.

### Claims

1.  A calibration apparatus (10) comprising:

    a first calibration unit (15a-1) that calibrates a first pH sensor (CS-1) measuring a pH of an aqueous solution;
    a second calibration unit (15a-2) that calibrates a second pH sensor (CS-2) different from the first pH sensor (CS-1); and
    a calibration management unit (15b) that manages the first pH sensor (CS-1) and the second pH sensor (CS-2) so as to enable calibrations thereof in parallel, when the first pH sensor (CS-1) and the second pH sensor (CS-2) are both immersed in a pH standard solution indicating a predetermined pH.

2.  The calibration apparatus (10) according to claim 1, wherein

    the pH standard solution is one of a neutral standard solution being a standard of neutrality, an acidic standard solution being a standard of acidity, and a basic standard solution being a standard of basicity, and
    the calibration management unit (15b)
    manages the first pH sensor (CS-1) and the second pH sensor (CS-2) so as to enable one-point calibrations thereof in parallel.

3.  The calibration apparatus (10) according to claim 1, wherein

    the pH standard solutions are two of a neutral standard solution being a standard of neutrality, an acidic standard solution being a standard of acidity, and a basic standard solution being a standard of basicity, and
    the calibration management unit (15b)
    manages the first pH sensor (CS-1) and the second pH sensor (CS-2) so as to enable two-point calibrations thereof in parallel.

4. The calibration apparatus (10) according to claim 1, wherein

the pH standard solutions are three of a neutral standard solution being a standard of neutrality, an acidic standard solution being a standard of acidity, and a basic standard solution being a standard of basicity, and
the calibration management unit (15b)
manages the first pH sensor (CS-1) and the second pH sensor (CS-2) so as to enable three-point calibrations thereof in parallel.

5. The calibration apparatus (10) according to any of claims 2 to 4, wherein
the neutral standard solution is a neutral phosphate pH standard solution or a phosphate pH standard solution.

6. The calibration apparatus (10) according to any of claims 2 to 5, wherein
the acidic standard solution is an oxalate pH standard solution or a phthalate pH standard solution.

7. The calibration apparatus (10) according to any of claims 2 to 6, wherein
the basic standard solution is a borate pH standard solution or a carbonate pH standard solution.

8. The calibration apparatus (10) according to any of claims 1 to 7, wherein
the first pH sensor (CS-1) and the second pH sensor (CS-2) each measure the pH of the aqueous solution by using a glass electrode method.

9. A calibration method,
the method executed by a computer (10), comprising:

calibrating a first pH sensor (CS-1) that measures a pH of an aqueous solution;
calibrating a second pH sensor (CS-2) different from the first pH sensor (CS-1); and
managing, when both of the first pH sensor (CS-1) and the second pH sensor (CS-2) are immersed in an identical pH standard solution, the first pH sensor (CS-1) and the second pH sensor (CS-2) so as to enable calibrations thereof in parallel.

10. A calibration program causing
a computer (10) to execute processing of:

calibrating a first pH sensor (CS-1) that measures a pH of an aqueous solution;
calibrating a second pH sensor (CS-2) that is different from the first pH sensor (CS-1); and
managing, when both of the first pH sensor (CS-1) and the second pH sensor (CS-2) are immersed in an identical pH standard solution, the first pH sensor (CS-1) and the second pH sensor (CS-2) so as to enable calibrations thereof in parallel.

# FIG.1

CALIBRATION APPARATUS 10

100

WORKER

W

pH SENSOR

CS-1   CS-2

(1)
CLEANING WITH
FIRST CLEANING
LIQUID

L1

FIRST
CLEANING
LIQUID

(2)
CALIBRATION
WITH ZERO
POINT BUFFER

L2

ZERO POINT
BUFFER

(3)
CLEANING WITH
SECOND CLEAN-
ING LIQUID

L3

SECOND
CLEANING
LIQUID

(4)
CALIBRATION
WITH SLOPE
POINT BUFFER

L4

SLOPE POINT
BUFFER

EP 4 653 859 A1

# FIG.2

FIG.3

(1) P1　10P　　　(2) P2/P3/P4　10P　　　(3) P5　10P　　　(4) P6/P7/P8　10P

CS　CS　CS　CS

L1　L2　L3　L4

EP 4 653 859 A1

# FIG.4

# FIG.5

# FIG.6

(1) P11

(2) P12/P13/P14

(3) P15

(4) P16/P17/P18

# FIG.7

```
        ┌─────────────┐
        │    START    │
        └──────┬──────┘
               │         ⌐S101
        ┌──────▼────────────────┐
        │ FIRST CLEANING PROCESS │
        └──────┬─────────────────┘
               │         ⌐S102
        ┌──────▼───────────────────┐
        │ FIRST CALIBRATION PROCESS │
        └──────┬────────────────────┘
               │         ⌐S103
        ┌──────▼─────────────────┐
        │ SECOND CLEANING PROCESS │
        └──────┬──────────────────┘
               │         ⌐S104
        ┌──────▼────────────────────┐
        │ SECOND CALIBRATION PROCESS │
        └──────┬─────────────────────┘
               │
        ┌──────▼──────┐
        │     END     │
        └─────────────┘
```

# FIG.8

⌐10

**CALIBRATION APPARATUS**

| 10c | 10d |
|---|---|
| MEMORY | PROCESSOR |

| 10a | 10b |
|---|---|
| COMMUNICA-TION DEVICE | STORAGE DEVICE |

# EUROPEAN SEARCH REPORT

**Application Number**

EP 25 17 6634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/012530 A1 (REINHOLD ANDREA [DE] ET AL) 9 January 2014 (2014-01-09) | 1-3,5-10 | INV. G01N27/416 |
| Y | * paragraphs [0004], [0007], [0014], [0021], [0036] - [0038]; figure 1 * | 4 | |
| X | US 5 502 388 A (MELZER WERNER [DE]) 26 March 1996 (1996-03-26) * Col.1 L.10-11, Col.2 L.10-18; figure 1 * | 1,8-10 | |
| X | US 7 820 029 B2 (UNIV NAT YUNLIN SCI & TECH [TW]) 26 October 2010 (2010-10-26) * Col.1 L.9-10, Col.4 L.17-36; figure 1 * | 1,9,10 | |
| X | CN 211 785 294 U (HKY TECH CO LTD) 27 October 2020 (2020-10-27) * paragraphs [0014], [0017]; figure 1 * | 1,9,10 | |
| X | US 2022/308006 A1 (MCLEOD GREGG ALLAN [US]) 29 September 2022 (2022-09-29) * paragraphs [0011], [0106]; figure 5 * | 1 | TECHNICAL FIELDS SEARCHED (IPC) G01N |
| Y | JP 3 138774 B2 (TOA ELECTRONICS) 26 February 2001 (2001-02-26) * the whole document * | 4 | |
| Y | US 2003/015423 A1 (LAGRECA ALFRED J [US] ET AL) 23 January 2003 (2003-01-23) * the whole document * | 4 | |

The present search report has been drawn up for all claims

| Place of search | Date of completion of the search | Examiner |
|---|---|---|
| Munich | 23 September 2025 | De Masi, Rita |

## ANNEX TO THE EUROPEAN SEARCH REPORT
## ON EUROPEAN PATENT APPLICATION NO.

EP 25 17 6634

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2025

| Patent document cited in search report | | Publication date | Patent family member(s) | | Publication date |
|---|---|---|---|---|---|
| US 2014012530 | A1 | 09-01-2014 | CN | 103542875 A | 29-01-2014 |
| | | | DE | 102013105863 A1 | 09-01-2014 |
| | | | DE | 202012102521 U1 | 09-08-2012 |
| | | | US | 2014012530 A1 | 09-01-2014 |
| US 5502388 | A | 26-03-1996 | EP | 0613001 A1 | 31-08-1994 |
| | | | JP | 3537478 B2 | 14-06-2004 |
| | | | JP | H06242072 A | 02-09-1994 |
| | | | US | 5502388 A | 26-03-1996 |
| US 7820029 | B2 | 26-10-2010 | TW | 200815750 A | 01-04-2008 |
| | | | US | 2008067081 A1 | 20-03-2008 |
| CN 211785294 | U | 27-10-2020 | NONE | | |
| US 2022308006 | A1 | 29-09-2022 | AU | 2020287158 A1 | 06-01-2022 |
| | | | BR | 112021023611 A2 | 19-04-2022 |
| | | | CA | 3139289 A1 | 10-12-2020 |
| | | | CN | 113924490 A | 11-01-2022 |
| | | | EP | 3980772 A1 | 13-04-2022 |
| | | | US | 2021010991 A1 | 14-01-2021 |
| | | | US | 2022308006 A1 | 29-09-2022 |
| | | | WO | 2020247778 A1 | 10-12-2020 |
| JP 3138774 | B2 | 26-02-2001 | JP | 3138774 B2 | 26-02-2001 |
| | | | JP | H05133927 A | 28-05-1993 |
| US 2003015423 | A1 | 23-01-2003 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2016188819 A

- JP 2001228139 A